# EUROPÄISCHE PATENTANMELDUNG

(11) **EP 2 469 238 A2**
(43) Veröffentlichungstag der Anmeldung: **27.06.2012**
(21) Anmeldenummer: 11193783.5
(22) Anmeldetag: 15.12.2011
(51) Int. Cl.: G01D 4/00, H02J 3/38, G01R 31/40, H01L 31/02, H02M 7/00, H02P 27/06

(54) **Photovoltaikanlage**

(30) Priorität: 21.12.2010 AT 21022010; 03.02.2011 AT 1452011
(71) Anmelder: Logotherm Regelsysteme GmbH, 3251 Purgstall an der Erlauf (AT)
(72) Erfinder: Atzenhofer, Werner, 3251 Purgstall (AT)
(74) Vertreter: Grabherr, Claudia

(57) **Zusammenfassung**

Die Erfindung betrifft eine Photovoltaikanlage (1) mit einem Photovoltaikmodul (2), einem Wechselrichter (3) und einer Regeleinheit (4), wobei die Photovoltaikanlage (1) zur Speisung eines elektrischen Verbrauchers (5) sowie eines öffentlichen Elektrizitätsnetzes (6) ausgeführt ist, wobei zur Messung der ins Elektrizitätsnetz (6) gelieferten elektrischen Leistung (7) ein Leistungsmesser (8) vorgesehen ist und die Regeleinheit (4) zur Regelung der vom elektrischen Verbraucher (5) aufgenommenen elektrischen Leistung (9) ausgeführt ist.

## Beschreibung

Die Erfindung betrifft eine Photovoltaikanlage mit zumindest einem Photovoltaikmodul, zumindest einem Wechselrichter und zumindest einer Regeleinheit, wobei die Photovoltaikanlage zur Speisung zumindest eines ersten elektrischen Verbrauchers sowie eines öffentlichen Elektrizitätsnetzes ausgeführt ist.

Private Photovoltaikanlagen dienen zur direkten Umwandlung von Sonnenenergie in elektrische Energie mittels Solarzellen. Dazu sind spezielle Photovoltaikmodule vorgesehen, welche Gleichspannung erzeugen und in der Regel mit einem Wechselrichter versehen werden, um die im Haushalt benötigte Wechselspannung zu erhalten.

Derartige Photovoltaikanlagen werden derzeit in privaten Haushalten in erster Linie dazu genutzt, elektrische Wärmepumpen anzutreiben. Derartige Wärmepumpen werden im Allgemeinen zu Heizzwecken, zur Erhitzung von Brauchwasser, oder auch insbesondere im Sommer zu Kühlzwecken eingesetzt. Die Regelung einer derartigen Photovoltaikanlage erfolgt typischerweise durch eine dedizierte Regeleinheit, welche die von der Photovoltaikanlage erzeugte elektrische Leistung abhängig von voreingestellten Parametern auf den oder die Verbraucher verteilt.

Aufgrund der Tatsache, dass die Erzeugung der photovoltaischen Energie und deren Verbrauch jedoch oft zeitversetzt ablaufen, kann nicht die gesamte photovoltaisch erzeugte Energie lokal direkt nach der Erzeugung auch verbraucht werden. Statt dessen wird die überschüssig erzeugte elektrische Energie üblicherweise in ein öffentliches Elektrizitätsnetz eingespeist, wobei für diese eingespeiste elektrische Energie vom Privathaushaft eine spezielle Vergütung (Einspeisetarif) bezogen werden kann. Als Richtwert kann davon ausgegangen werden, dass nur ca. 30% - 40% der lokal produzierten elektrischen Energie auch selbst lokal verbraucht wird.

Politische als auch private Bestrebungen gehen jedoch zunehmend in die Richtung, Photovoltaik direkt im Haushalt zu nutzen, und eine Einspeisung in das öffentliche Elektrizitätsnetz nur in Ausnahmefällen, wenn überhaupt, durchzuführen.

Darüber hinaus zeichnet sich ab, dass Haushalte über zunehmend mehr elektrisch aufladbare Verbraucher verfügen, beispielsweise elektrisch aufladbare PKWs, Elektrofahrräder, Scooter, Rasenmäher, tragbare Computer, etc. Es wäre wünschenswert, die durch eine bestehende Photovoltaikanlage generierte elektrische Leistung in erster Linie direkt im Haushalt als Eigennutzung zu verbrauchen, und nur wenn keinerlei andere Möglichkeiten bestehen, die elektrische Leistung ins öffentliche Elektrizitätsnetz zu übertragen. Insbesondere bestehende Photovoltaikanlagen sind jedoch auf eine Einspeisung ins öffentliche Elektrizitätsnetz wie oben beschrieben eingerichtet.

Die technische Aufgabe der vorliegenden Erfindung besteht demnach darin, eine Verbesserung bestehender Photovoltaikanlagen vorzuschlagen, wodurch eine Eigennutzung der erzeugten elektrischen Energie in höherem Grade erreicht werden kann, ohne ganz auf die Einspeisung in ein öffentliches Elektrizitätsnetz zu verzichten. Insbesondere soll es möglich sein, bestehende Photovoltaikanlagen anzupassen, um diese Aufgabe zu erfüllen.

Diese Aufgabe wird erfindungsgemäß dadurch gelöst, dass ein Leistungsmesser vorgesehen ist und die Regeleinheit zur Regelung der vom ersten elektrischen Verbraucher aufgenommenen elektrischen Leistung ausgeführt ist.

Bei dem ersten elektrischen Verbraucher kann es sich vorzugsweise um eine elektrische Wärmepumpe zur Heizung, Kühlung, oder zur Erzeugung von Warmwasser handeln.

Im Gegensatz zum Stand der Technik, bei dem der elektrische Verbraucher, in der Regel die elektrische Wärmepumpe, bei fester Leistung betrieben wird, und die Überschussleistung in das Elektrizitätsnetz eingespeist wird, kann die erfindungsgemäße Regeleinheit die Leistung des ersten elektrischen Verbrauchers derart einstellen, dass möglichst wenig, keine oder ein bestimmter Zielwert an elektrischer Leistung ins Elektrizifiätsnetz eingespeist wird. Dabei kann dieser Zielwert insbesondere auch von äußeren Faktoren, beispielsweise der Tageszeit, abhängig sein. Erfindungsgemäß kann vorzugsweise die Regeleinheit mit dem Leistungsmesser und dem elektrischen Verbraucher in einer Wirkverbindung stehen, sodass die aufgenommene elektrische Leistung des Verbrauchers direkt von der Regeleinheit angepasst wird.

Der Leistungsmesser kann vorzugsweise sowohl zur Messung der ins Elektrizitätsnetz gelieferten elektrischen Leistung, als auch zur Messung der vom Elektrizitätsnetz bezogenen elektrischen Leistung ausgeführt sein.

Insbesondere kann eine erste Verbindung des Leistungsmessers mit der Regeleinheit zur Übermittlung der ins Elektrizitätsnetz abgegebenen bzw. vom Elektrizitätsnetz bezogenen Leistung, und eine zweite Verbindung der Regeleinheit mit dem ersten elektrischen Verbraucher zur Regelung der Leistungsaufnahme des ersten elektrischen Verbrauchers vorgesehen sein.

Bei dem ersten elektrischen Verbraucher kann es sich wie oben erwähnt vorzugsweise um eine Wärmepumpe, aber auch um einen elektrischen Heizwiderstand, ein elektrisches Ladegerät oder dergleichen handeln. Dieser erste elektrische Verbraucher kann mit einem Pufferspeicher, beispielsweise einem Warmwasserspeicher, verbunden sein, um die Energie für spätere Verwendung zwischenzuspeichern.

Bei dem Wechselrichter kann es sich insbesondere um einen Wechselrichter mit MPP-Tracker handeln, der die von dem Photovoltaikmodul gelieferte Gleichspannung in 230V oder 400V Wechselspannung umwandelt.

Zusätzlich zu dem ersten elektrischen Verbraucher, insbesondere der Wärmepumpe, ist erfindungsgemäß vorgesehen, dass zumindest ein zweiter elektrischer Verbraucher mit der Regeleinheit verbunden wird, um der Regeleinheit die Nutzung von elektrischer Überschussleistung zu ermöglichen. Dabei kann es sich vorzugsweise um einen Elektro-Heizeinsatz, eine elektrisch aufladbare Batterie, oder um beliebige elektrische Ladestationen für elektrische betriebene Fahrzeuge, Werkzeuge, elektronische Geräte oder dergleichen handeln.

Erfindungsgemäß ist weiters vorgesehen, dass über eine externe Batterie oder einen Batteriesatz und über einen Wechselrichter elektrischer Strom in die Haushaltsnetzversorgung eingespeist wird. Die Leistung des Wechselrichters, welche der Batterie entnommen wird, kann über einen Ausgang des Regelgeräts so eingestellt werden, dass die ins Netz gelieferte Leistung einen Zielwert, insbesondere den Wert Null, ergibt. Dies kann dann erforderlich sein, die durch das Photovoltaikmodul erzeugte Leistung höher ist, als die Summe aus Haushaltsnutzleistung und Leistung der elektrischen Verbraucher (Wärmepumpe, Ladegeräte, etc.), und dennoch keine elektrische Leistung ins öffentliche Netz abgegeben werden soll (aufgrund eines zu niedrigen Einspeisetarifs).

Die Ladung der Batterie darf aufgrund der sonst reduzierten Batterielebensdauer einen gewissen, batteriespezifischen Ladungsminimalwert nicht unterschreiten. Aus diesem Grund kann erfindungsgemäß vorgesehen sein, dass der mit der Batterie verbundene Wechselrichter beim Unterschreiten dieses Ladungsminimalwerts abgeschaltet wird.

Weiters kann vorgesehen sein, dass der Ladungszustand der Batterie mit einem Batteriemonitor überwacht wird. Dieser Batteriemonitor kann die in die Batterie zugeführte und entnommene Leistung mitschreiben und stets den aktuellen Ladezustand der Batterie überwachen. Dieser Ladezustand kann der Regeleinheit über eine Schnittstelle mitgeteilt werden.

Weiters ist erfindungsgemäß vorgesehen, dass die Batterie durch einen günstigeren Stromtarif, beispielsweise Nachtstrom, geladen wird. Die Maximalladung kann durch die Regeleinheit begrenzt werden, um zu erreichen, dass am Tag einen eventuellen Überschuss an elektrischer Photovoltaikleistung über die Batterie speichern zu können, und nicht ins öffentliche Netz einspeisen zu müssen. Weiters kann der sonst in der Nacht benötigte Strom durch die Batterie kompensiert werden.

Durch Verwendung der Batterie können also Energieverbrauchsschwankungen im Haushalt kompensiert werden. Ohne Batterie würde man in diesem Fall Strom aus dem öffentlichen Netz beziehen müssen. Die Batterie wirkt demnach als Netzausfallssicherung bzw. Unterbrechungsfreie Stromversorgung (USV) für den Fall, dass das öffentliche Netz ausfällt. Zu diesem Zweck kann vorgesehen sein, dass die verschiedenen Verbraucherkreise im Haushalt unterschiedlichen Prioritäten zugeordnet sind, wobei beispielsweise Heiz- und Kühlgeräte die oberste Priorität aufweisen, und im Falle eines Netzausfalls von der Batterie versorgt werden.

Erfindungsgemäß kann eine Netzausfallserkennung vorgesehen sein.

Um eine entsprechende Batterieversorgung sicherstellen zu können, kann vorgesehen sein, dass die Batterie eine Mindestladung aufweisen muss, und entsprechend stets elektrische Photovoltaikleistung in die Batterie gespeist wird, bis die Mindestladung erreicht wird.

Weiters kann vorgesehen sein, dass die Batterieladelogik unterschiedliche Betriebsmodi aufweisen kann. Beispielsweise kann im Betriebsfall hoher Wirtschaftlichkeit die Batterie in der Nacht auf ein absolutes Minimum entladen werden, um am nächsten Tag wieder aufgeladen zu werden. Demgegenüber kann im Betriebsfall hoher Netzausfallsicherheit die Batterie auf einer bestimmten definierten Ladung gehalten werden, und gegebenenfalls sogar vom öffentlichen Netz nachgeladen werden, um im Notfall, wenn das öffentliche Netz ausfällt, beispielsweise mindestens zwei Tage ohne öffentliches Netz auskommen zu können.

Erfindungsgemäß kann die Batterie durch überschüssige Photovoltaikleistung nach einer eingestellten Priorität und/oder einem Zeitfenster geladen werden. Dabei können auch die anderen elektrischen Verbraucher, insbesondere die Wärmepumpe berücksichtigt werden.

Bei der Batterie oder dem Batteriesatz kann es sich um eine beliebige aufladbare Energiequelle handeln, die beispielsweise auf elektrochemischer (Akkumulatoren) oder elektrostatischer (Kondensatoren) Funktion beruht.

Die vorliegende Erfindung erstreckt sich weiters auf eine Regeleinheit für eine erfindungsgemäße Photovoltaikanlage. Eine derartige Regeleinheit umfasst insbesondere einen Regeleingang, einen Regelausgang, einen Regler und zumindest eine elektrische Schaltstufe zur Ansteuerung elektrischer Verbraucher.

Es kann weiters erfindungsgemäß vorgesehen sein, dass die Regeleinheit eine Energieversorgung, eine Elektronikeinheit und eine Benutzerschnittstelle umfasst.

Schließlich umfasst die vorliegende Erfindung ein Verfahren zur Regelung der von einer Photovoltaikanlage an einen ersten elektrischen Verbraucher sowie an ein öffentliches Elektrizitätsnetz abgegebenen elektrischen Leistung, wobei die zum Elektrizitätsnetz übertragene elektrische Leistung gemessen wird und die Leistungsaufnahme des ersten elektrischen Verbrauchers solange angepasst wird bis die ins Elektrizitätsnetz abgegebene elektrische Leistung einen vorgegebenen Wert, insbesondere den Wert Null, erreicht.

Bei Bedarf kann elektrische Leistung über einen leistungssteuerbaren Wechselrichter aus einem Batteriesatz zur Nutzung in einem elektrischen Haushaltsnetz entnommen werden kann. Bei Ausfall des öffentlichen Elektrizitätsnetzes kann der Wechselrichter über den Batteriesatz die Elektrizitätsversorgung im Inselbetrieb aufrechterhalten.

Erfindungsgemäß kann bei diesem Verfahren vorgesehen sein, dass bei Bedarf zusätzlich zum ersten elektrischen Verbraucher zumindest ein zweiter elektrischer Verbraucher mit elektrischer Leistung versorgt wird, bis die ins Elektrizitätsnetz abgegebene elektrische Leistung einen vorgegebenen Wert, insbesondere den Wert Null, erreicht. Dies umfasst auch die Messung negativer übertragener Leistung, mit anderen Worten, den Fall, dass elektrische Leistung aus dem Elektrizitätsnetz bezogen wird. In diesem Fall werden elektrische Verbraucher abgeschaltet, bzw. die Leistungsaufnahme des ersten elektrischen Verbrauches reduziert, bis der Zielwert für die ins Elektrizitätsnetz abgegebene Leistung, insbesondere der Wert Null, erreicht wird.

Dabei kann die Zuschaltung bzw. Abschaltung, insbesondere die Leistungsaufnahme der elektrischen Verbraucher nach einer im Vorhinein festgelegten Prioritätsliste erfolgen. Insbesondere kann dabei weiters erfindungsgemäß vorgesehen sein, dass die Leistungsaufnahme der elektrischen Verbraucher in einem vorbestimmten optimalen Bereich gehalten wird.

Die vorliegende Erfindung beschränkt sich nicht darauf, dass es sich bei dem ersten elektrischen Verbraucher um eine Wärmepumpe handelt, sondern auf alle Ausformungen erster und zweiter elektrischer Verbraucher. Beispielsweise kann der erste elektrische Verbraucher ein elektrischer Energiespeicher (Kondensator, Batterie), der zweite elektrische Verbraucher eine Kfz-Ladestation, und erst der dritte elektrische Verbraucher eine Wärmepumpe sein. Die Priorität der elektrischen Verbraucher kann an den Anwendungsfall angepasst werden.

Weitere vorteilhafte Merkmale sind der Beschreibung, den Zeichnungen und den Ansprüchen zu entnehmen.

Die Erfindung wird nun anhand von Ausführungsbeispielen in den folgenden Figuren näher beschrieben. Es zeigen
Fig. 1: ein schematisches Blockschaltbild einer erfindungsgemäßen Photovoltaikanlage; Fig. 2: ein schematisches Blockschaltbild einer erfindungsgemäßen Regeleinheit für eine Photovoltaikanlage gemäß Fig. 1; Fig. 3: ein schematisches Ablaufdiagramm eines erfindungsgemäßen Verfahrens zur Regelung einer Photovoltaikanlage;
Fig. 4: ein schematisches Blockschaltbild einer zweiten Ausführungsform einer erfindungsgemäßen Photovoltaikanlage; Fig. 5: ein schematisches Blockschaltbild einer erfindungsgemäßen Regeleinheit für eine Photovoltaikanlage gemäß Fig. 4;

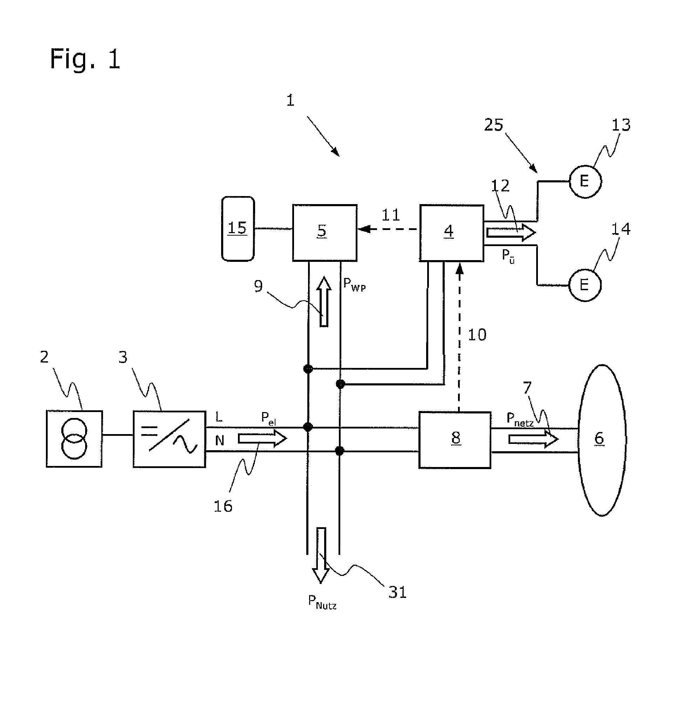

Fig. 1 zeigt ein schematisches Blockschaltbild einer erfindungsgemäßen Photovoltaikanlage 1 mit einem Photovoltaikmodul 2. Das Photovoltaikmodul 2 erzeugt Gleichspannung und ist mit einem Wechselrichter 3 mit MPP-Tracker verbunden, der die Gleichspannung in eine Wechselspannung mit 230V und 50Hz umwandelt. Der Wechselrichter 3 liefert die elektrische Leistung Pₑₗ 16, die sich aufspaltet in einen zu einem ersten elektrischen Verbraucher 5 gelieferten Anteil der elektrischen Leistung P_{WP} 9, einen Nutzleistungsanteil P_{Nutz} 31 sowie eine in ein Elektrizitätsnetz 6 gelieferte elektrische Leistung P_{netz} 7. Ein Leistungsmesser 8 misst die ins öffentliche Elektrizitätsnetz 6 übertragene Leistung P_{netz} und ist über eine erste Verbindung 10 mit einer Regeleinheit 4 verbunden. Die Regeleinheit 4 ist mit der vom Wechselrichter 3 gelieferten elektrischen Spannung verbunden und verfügt weiters über eine zweite Verbindung 11 mit dem ersten elektrischen Verbraucher 5.

Der Leistungsmesser 8 ist derart ausgeführt, dass sowohl positive (es wird Leistung ins Elektrizitätsnetz 6 geliefert) als auch negative (es wird Leistung vom Elektrizitätsnetz 6 bezogen) Leistungswerte gemessen werden können.

Die erste Verbindung 10 ist derart ausgeführt, dass vom Leistungsmesser 8 Information über die gemessene Leistung an die Regeleinheit 4 übertragen werden kann, und die zweite Verbindung 11 ist derart ausgeführt, dass die Regeleinheit 4 die von dem ersten elektrischen Verbraucher 5 aufgenommene elektrische Leistung einstellt. Darüber hinaus ist der erste elektrische Verbraucher 5 mit einem Pufferspeicher, beispielsweise einem Warmwasserspeicher, verbunden. Die Regeleinheit 4 ist durch die erste Verbindung 10 und die zweite Verbindung 11 in der Lage, abhängig von der ins Netz gelieferten Leistung P_{netz} 7 die vom ersten elektrischen Verbraucher 5 aufgenommene Leistung zu steuern.

Weiters verfügt die Regeleinheit 4 über Ausgänge zu mehreren zweiten elektrischen Verbrauchern 25, im vorliegenden Beispiel einen Elektro-Heizeinsatz 13 und eine elektrische Ladestation 14. Dabei kann es sich vorzugsweise um eine Ladestation für elektrische Fahrzeuge, elektronische Geräte, Werkzeuge oder dergleichen handeln. Abhängig von der gemessenen Leistung P_{netz} 7 kann die Regeleinheit eine oder mehrere elektrische Verbraucher zuschalten, wodurch zusätzlich eine Überschussleistung P_{ü} übertragen wird. Die Regeleinheit kann damit die ins öffentliche Elektrizitätsnetz übertragene Leistung P_{netz} 7 auf einen bestimmten Wert, insbesondere den Wert Null, einstellen, und die Überschussleistung durch Aufschalten gewisser elektrischer Verbraucher, sinnvoll nutzen. Beispielsweise kann die erzeugte Überschussleistung im Fall dass gerade wenig Nutzleistung 31 benötigt wird, der erste elektrische Verbraucher 5 auf voller Leistung läuft und der Einspeisetarif für die ins Netz gelieferte Netzleistung 7 unvorteilhaft ist zur Gänze für elektrische Ladegeräte oder vergleichbare Verbraucher benutzt werden.

Es kann insbesondere vorgesehen sein, dass beim Aufschalten der Verbraucher eine Prioritätsliste verwendet wird, die zeitabhängig oder zeitgesteuert sein kann. Weiters wird durch die vom Photovoltaikmodul 2 generierte elektrische Leistung Pₑₗ 16 auch die Regeleinheit 4 selbst versorgt, wobei dieser Energieverbrauch gering ist und in der obigen Beschreibung nicht berücksichtigt wurde. Wird die ins Elektrizitätsnetz gelieferte Leistung negativ, d.h. die elektrischen Verbraucher ziehen Leistung vom Elektrizitätsnetz 6 weil die Photovoltaikleistung zu gering bzw. zu viele Verbraucher zugeschalten sind oder die Wärmepumpe auf einem zu hohen Leistungspegel betrieben wird, dann schaltet die Regeleinheit entsprechend Verbraucher ab bzw. reduziert die Leistungsaufnahme der Wärmepumpe, bis die vom Netz bezogene Leistung auf Null bzw. den Minimalwert sinkt.

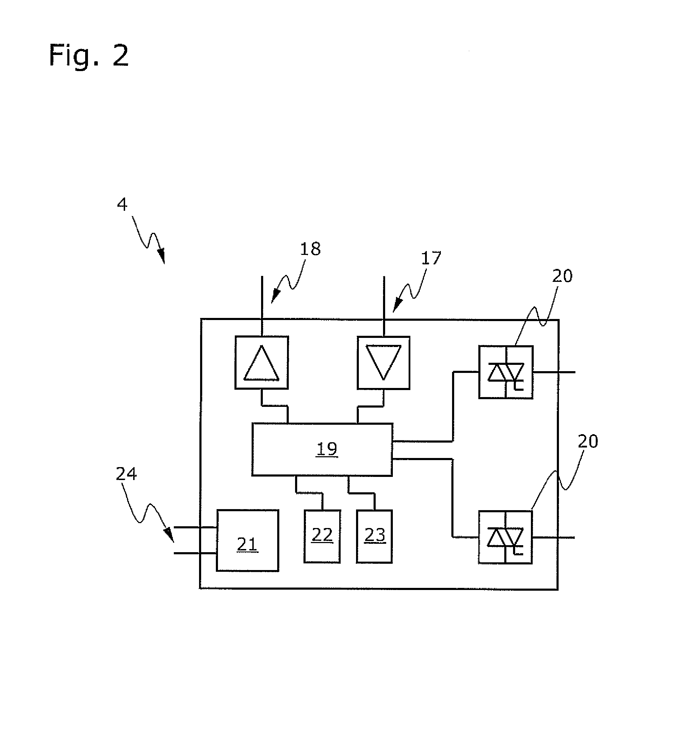

Fig. 2 zeigt ein schematisches Blockschaltbild einer erfindungsgemäßen Regeleinheit 4 für eine Photovoltaikanlage 1 gemäß Fig. 1. Die Regeleinheit 4 umfasst den eigentlichen Regler 19, eine oder mehrere elektrische Schaltstufen 20 zum Ansteuern externer Verbraucher, einen Regeleingang 17, einen Regelausgang 18 sowie die mit Anschlüssen 24 versehene Energieversorgung 21 und eine Elektronikeinheit 22 sowie eine Benutzerschnittstelle 23. Der Regeleingang 17 empfängt das Regelsignal vom Leistungsmesser (Verbindung 10), und der Regelausgang 18 stellt die Leistungsaufnahme des ersten elektrischen Verbrauchers 5 (Verbindung 11 zur Wärmepumpe) ein. Weitere Module, die für derartige Regeleinheiten allgemein gebräuchlich und dem Fachmann bekannt sind, wurden aus Gründen der Übersichtlichkeit nicht eingezeichnet.

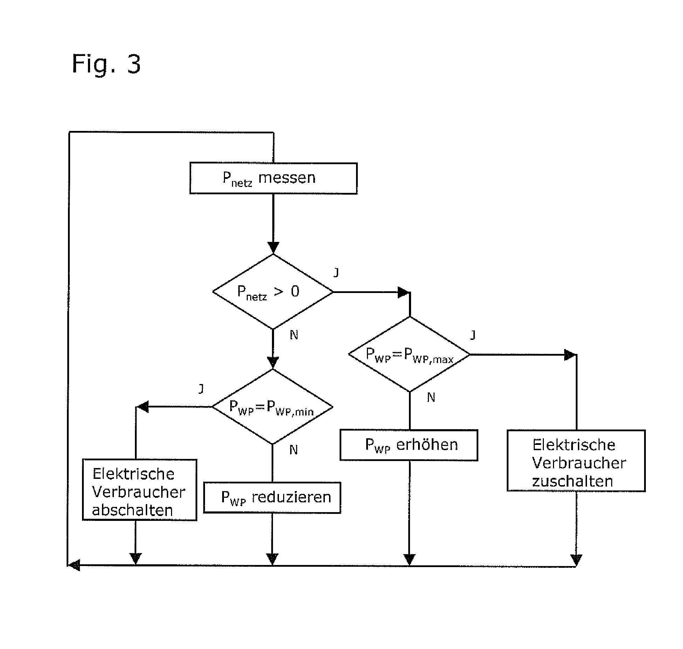

Fig. 3 zeigt ein schematisches Ablaufdiagramm eines erfindungsgemäßen Verfahrens zur Regelung einer erfindungsgemäßen Photovoltaikanlage 1. Zunächst wird die ins öffentliche Elektrizitätsnetz 6 übertragene Leistung P_{netz} gemessen. Ist diese größer 0 (oder größer einem bestimmten voreingestellten Zielwert), so wird zunächst abgefragt, ob die elektrische Wärmepumpe (oder ein anderer erster elektrischer Verbraucher 5) bereits die maximalen Leistungsstufe erreicht hat. Ist dies nicht der Fall, wird die Leistung der elektrischen Wärmepumpe (des ersten elektrischen Verbrauchers 5) erhöht.

Weiters ist vorgesehen, dass die elektrische Leistung des ersten elektrischen Verbrauchers 5 reduziert wird, wenn die ins Elektrizitätsnetz 6 übertragene Leistung negativ wird, wenn also die Anlage elektrische Energie vom Netz bezieht. Dies ist dann der Fall, wenn die ins öffentliche Elektrizitätsnetz 6 übertragene Leistung P_{netz} kleiner Null ist. Dann werden elektrische Verbraucher abgeschalten bzw. die Leistungsaufnahme der Wärmepumpe reduziert.

Gegebenenfalls kann auch vorgesehen sein, dass die elektrische Wärmepumpe nur in einem gewissen optimalen Bereich betrieben wird. Ist die Leistung der elektrischen Wärmepumpe maximal, oder im optimalen Bereich, sodass keine Anpassung erfolgen kann oder soll, so werden weitere elektrische Verbraucher 25 zugeschaltet. Danach erfolgt wiederum die Messung der ins Netz gelieferten Leistung 7, und der Kreislauf beginnt von vorne bis die ins Netz gelieferte Leistung den Zielwert, insbesondere den Wert 0, erreicht hat. Wiederum ist vorgesehen, dass elektrische Verbraucher abgeschaltet werden, wenn die ins Netz gelieferte Leistung negativ ist, also elektrische Leistung aus dem Elektrizitätsnetz bezogen wird.

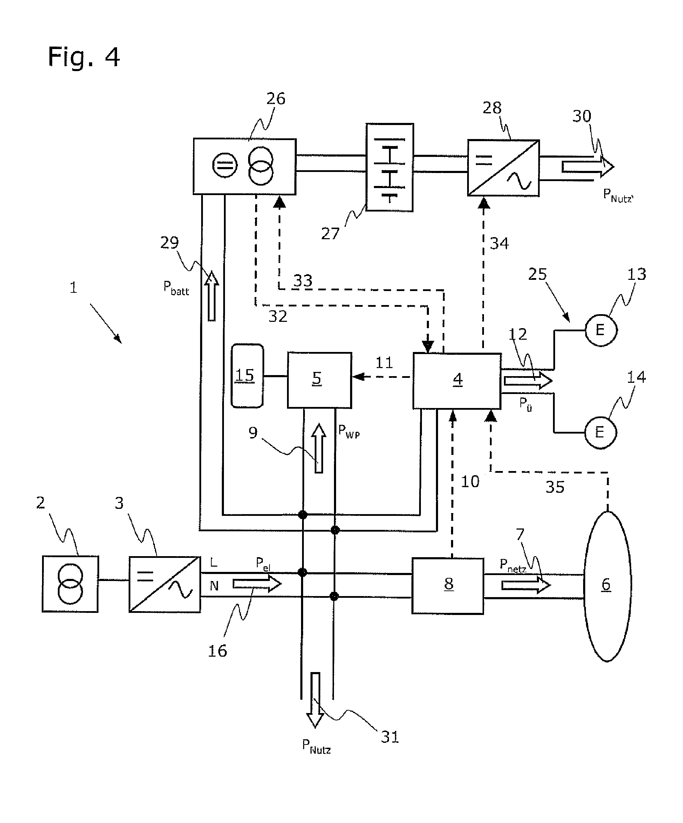

Fig. 4 zeigt ein schematisches Blockschaltbild einer alternativen Ausführungsform der erfindungsgemäßen Vorrichtung. In dieser Ausführungsform ist zusätzlich eine aufladbare Batterie 27 vorgesehen, welche einen längerfristigen Inselbetrieb der Vorrichtung ermöglicht. Die Batterie 27 liefert einerseits über den Wechselrichter 28 die elektrische Nutzleistung P_{Nutz'} 30, die als zusätzliche Nutzleistung zur bereits vorhandenen, vom Photovoltaikmodul 2 gelieferten Nutzleistung 30 zu sehen ist. Andererseits kann die Batterie 27 über ein Ladegerät mit Batteriemonitor 26 aufgeladen werden. Zu diesem Zweck wird das Ladegerät mit Batteriemonitor 26 mit elektrischer Batterieladeleistung 29 versorgt.

Der Wechselrichter 28 ist in seiner Leistung regelbar ausgeführt und ist über die Verbindung für Leistungsregelung 34 mit der Regeleinheit 4 verbunden. Somit kann die Regeleinheit einstellen, welche elektrischen Leistung die Batterie 27 als Nutzleistung P_{Nutz'} 30 an den Haushalt abgibt. Weiters liefert das Ladegerät mit Batteriemonitor 26 einerseits über die Verbindung für Batteriemonitor 32 den aktuellen Ladungszustand der Batterie 27 an die Regeleinheit 4, und andererseits wird das Ladegerät mit Batteriemonitor 26 über die Verbindung 33 von der Regeleinheit 4 so eingestellt, dass beim Vorliegen einer Überschussleistung diese Überschussleistung zur Aufladung der Batterie 27 verwendet wird.

Die von der Batterie aufgenommene und abgegebene Leistung wird von der Regeleinheit 4 überwacht und mitgeschrieben. Es kann der Minimal- und Maximalladungszustand eingestellt werden, wobei beim Unterschreiten des Minimalladungszustands der Wechselrichter 28 abgeschaltet wird, um die Batterielebensdauer zu erhöhen. Weiters ist eine Verbindung für Netzausfallserkennung 35 vorgesehen, welche einen Ausfall des öffentlichen Elektrizitätsnetzes 6 erkennt und an die Regeleinheit 4 liefert. In diesem Fall kann der Wechselrichter 28 über die Batterie 27 die Stromversorgung für den Haushalt aufrechterhalten.

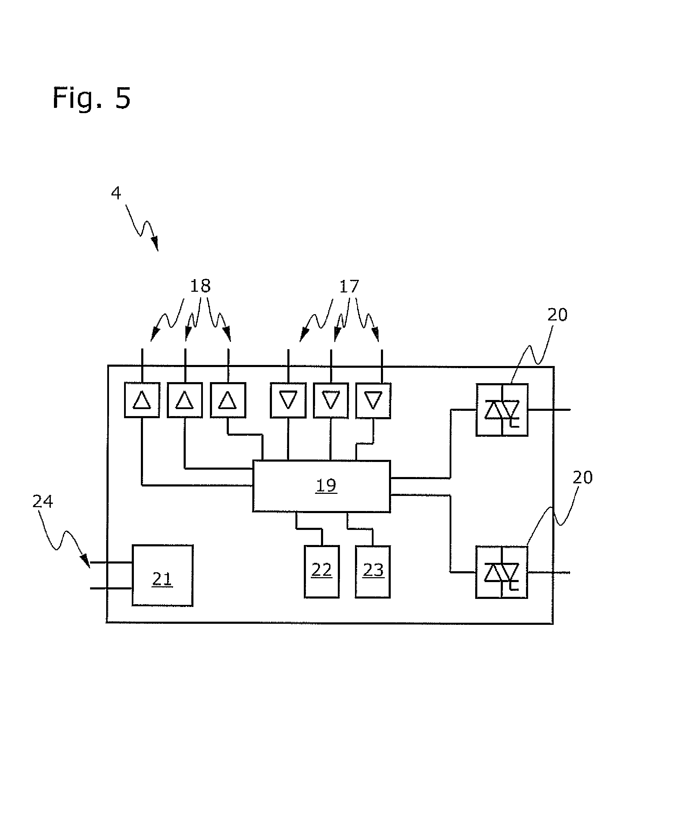

Fig. 5 zeigt ein schematisches Blockschaltbild der Regeleinheit 4 des erfindungsgemäßen Ausführungsbeispiels aus Fig. 4. Die Regeleinheit 4 verfügt zusätzlich zu dem Ausführungsbeispiel aus Fig. 2 über mehrere Regeleingänge 17 und Regelausgänge 18, um eine Verbindung mit den Eingangsverbindungen 10, 32 und 35 bzw. den Ausgangsverbindungen 33, 34 und 11 zu ermöglichen.

Es kann erfindungsgemäß vorgesehen sein, dass der Zielwert zeitabhängig ist, sodass beispielsweise zu bestimmten Zeiten elektrische Energie ins Elektrizitätsnetz 6 übertragen werden soll, während dies zu anderen Zeiten vermieden werden soll. Ebenso kann das Zuschalten der elektrischen Verbraucher 25 oder der Batterie 27 zeitgesteuert oder gemäß einer Prioritätenliste erfolgen. Die entsprechende Programmlogik kann durch die erfindungsgemäße Regeleinheit 4 ausgeführt sein und ist ebenfalls Teil der Erfindung.

### Bezugszeichenliste

- 1: Photovoltaikanlage
- 2: Photovoltaikmodul
- 3: Wechselrichter
- 4: Regeleinheit
- 5: Erster Elektrischer Verbraucher
- 6: Öffentliches Elektrizitätsnetz
- 7: Elektrische Leistung P_{netz}
- 8: Leistungsmesser
- 9: Elektrische Leistung P_{WP}
- 10: Erste Verbindung
- 11: Zweite Verbindung
- 12: Überschussleistung P_{ü}
- 13: Elektro-Heizeinsatz
- 14: Elektrische Ladestation
- 15: Pufferspeicher
- 16: Elektrische Leistung Pₑₗ
- 17: Regeleingang
- 18: Regelausgang
- 19: Regler
- 20: Elektrische Schaltstufe
- 21: Energieversorgung
- 22: Elektronikeinheit
- 23: Benutzerschnittstelle
- 24: Anschlüsse
- 25: Zweiter elektrischer Verbraucher
- 26: Ladegerät mit Batteriemonitor
- 27: Batteriesatz
- 28: Wechselrichter
- 29: Batterieladeleistung P_{Batt}
- 30: Erste Nutzleistungskomponente P_{nutz}
- 31: Zweite Nutzleistungskomponente P_{nutz'}
- 32: Verbindung für Batteriemonitor
- 33: Verbindung für Strom- und Spannungsregelung der Batterieladung
- 34: Verbindung für Leistungsregelung
- 35: Verbindung für Netzausfallserkennung

## Patentansprüche

1. Photovoltaikanlage (1) mit zumindest einem Photovoltaikmodul (2), zumindest einem Wechselrichter (3) und zumindest einer Regeleinheit (4), wobei die Photovoltaikanlage (1) zur Speisung zumindest eines ersten elektrischen Verbrauchers (5) sowie eines öffentlichen Elektrizitätsnetzes (6) ausgeführt ist, **dadurch gekennzeichnet, dass** ein Leistungsmesser (8) vorgesehen ist und die Regeleinheit (4) zur Regelung der vom ersten elektrischen Verbraucher (5) aufgenommenen elektrischen Leistung (9) ausgeführt ist.

2. Photovoltaikanlage (1) nach Anspruch 1, **dadurch gekennzeichnet, dass** der Leistungsmesser (8) sowohl zur Messung der ins Elektrizitätsnetz (6) gelieferten elektrischen Leistung, als auch zur Messung der vom Elektrizitätsnetz (6) bezogenen elektrischen Leistung ausgeführt ist.

3. Photovoltaikanlage (1) nach Anspruch 1 oder 2, **dadurch gekennzeichnet, dass** eine erste Verbindung (10) des Leistungsmessers (8) mit der Regeleinheit (4) zur Übermittlung der ins Elektrizitätsnetz (7) abgegebenen Leistung, und eine zweite Verbindung (11) der Regeleinheit (4) mit dem ersten elektrischen Verbraucher (5) zur Regelung der Leistungsaufnahme des ersten elektrischen Verbrauchers (5) vorgesehen ist.

4. Photovoltaikanlage nach einem der Ansprüche 1 bis 3, **dadurch gekennzeichnet, dass** es sich bei dem ersten elektrischen Verbraucher (5) um eine Wärmepumpe, einen elektrischen Heizwiderstand, ein elektrisches Ladegerät oder dergleichen handelt.

5. Photovoltaikanlage nach einem der Ansprüche 1 bis 4, **dadurch gekennzeichnet, dass** die Regeleinheit (4) zur Nutzung von Überschussleistung (12) mit zumindest einem zweiten elektrischen Verbraucher (25), insbesondere einem Elektro-Heizeinsatz (13), einer elektrische Ladestation (14) oder einer elektrisch aufladbaren Batterie verbunden ist.

6. Photovoltaikanlage (1) nach einem der Ansprüche 1 bis 5, **dadurch gekennzeichnet, dass** ein elektrisch aufladbarer Batteriesatz (27) und ein damit verbundener, den Batteriesatz (27) aufladendes, von der Regeleinheit (4) ansteuerbares, den Ladungszustand des Batteriesatzes (27) detektierendes Ladegerät mit Batteriemonitor (26) vorgesehen ist.

7. Photovoltaikanlage (1) nach Anspruch 6, **dadurch gekennzeichnet, dass** der Batteriesatz (27) über einen durch die Regeleinheit (4) leistungssteuerbaren Wechselrichter (28) zur Abgabe elektrischer Nutzleistung an ein elektrisches Haushaltsnetz ausgeführt ist.

8. Photovoltaikanlage (1) nach Anspruch 6 oder 7, **dadurch gekennzeichnet, dass** das Ladegerät mit Batteriemonitor (26) zur Aufnahme elektrischer Leistung vom Photovoltaikmodul (2) und zur Ladung des Batteriesatzes (27) ausgeführt ist.

9. Photovoltaikanlage (1) nach einem der Ansprüche 6 bis 9, **dadurch gekennzeichnet, dass** der Batteriesatz (27) als unterbrechungsfreie Stromversorgung dient und bestimmte, vorzugsweise durch eine Prioritätenliste gereihte Verbraucher bei einem Netzausfall mit elektrischer Energie versorgt.

10. Regeleinheit (4) für eine Photovoltaikanlage (1) nach einem der Ansprüche 1 bis 9.

11. Verfahren zur Regelung der von einer Photovoltaikanlage (1) an einen ersten elektrischen Verbraucher (5) sowie an ein öffentliches Elektrizitätsnetz (6) abgegebenen elektrischen Leistung, **dadurch gekennzeichnet, dass** die zum Elektrizitätsnetz (6) übertragene elektrische Leistung (7) gemessen wird und die Leistungsaufnahme des ersten elektrischen Verbrauchers (5) solange angepasst wird bis die ins Elektrizitätsnetz (6) abgegebene elektrische Leistung einen vorgegebenen Wert, insbesondere den Wert Null, erreicht.

12. Verfahren nach Anspruch 11, **dadurch gekennzeichnet, dass** bei Bedarf zusätzlich zumindest ein zweiter elektrischer Verbraucher (25) mit elektrischer Leistung versorgt wird, bis die ins Elektrizitätsnetz (6) abgegebene elektrische Leistung einen vorgegebenen Wert, insbesondere den Wert Null, erreicht.

13. Verfahren nach Anspruch 11 oder 12, **dadurch gekennzeichnet, dass** bei Bedarf elektrische Leistung über ein Ladegerät mit Batteriemonitor (26) an einen aufladbaren Batteriesatz (27) abgegeben wird.

14. Verfahren nach einem der Ansprüche 11 bis 13, **dadurch gekennzeichnet, dass** das Ladegerät mit Batteriemonitor (26) den Ladezustand des Batteriesatzes (27) überwacht und an die Regeleinheit (4) überträgt und die Regeleinheit (4) bei Unterschreitung eines batteriespezifischen Ladungsminimalwerts der Batterie (27) den Wechselrichter (28) abschaltet.

15. Verfahren nach einem der Ansprüche 13 oder 14, **dadurch gekennzeichnet, dass** der Batteriesatz (27) als unterbrechungsfreie Stromversorgung dient und bestimmte, vorzugsweise durch eine Prioritätenliste gereihte Verbraucher bei einem Netzausfall mit elektrischer Energie versorgt, wobei insbesondere
a. im Fall gewünschter hoher Wirtschaftlichkeit der Batteriesatz in der Nacht auf ein Minimum entladen wird, oder
b. im Fall gewünschter hoher Netzausfallsicherheit der Batteriesatz stets auf einem Mindestladungsniveau gehalten wird.
